# EUROPEAN PATENT APPLICATION

(11) **EP 4 000 816 A1**
(43) Date of publication of application: **25.05.2022**
(21) Application number: 21203604.0
(22) Date of filing: 20.10.2021
(51) Int. Cl.: B25J 9/16

(54) **ROBOT SAFETY WEIGHT COMPENSATION SYSTEM AND METHOD CAPABLE OF COMPENSATING WEIGHT OF ROBOT**

(30) Priority: 16.11.2020 TW 109140216
(71) Applicant: Techman Robot Inc., Taoyuan City 33383 (TW)
(72) Inventor: Wang, Pei-Jui, 33383 Taoyuan City (TW); Hsiao, Ting-Ya, 33383 Taoyuan City (TW)
(74) Representative: Straus, Alexander

(57) **Abstract**

A robot safety weight compensation system (10) and method calculate a difference between an estimated torque calculated by a dynamics model and a detected torque to form a weight tolerance. When the weight tolerance exceeds a predetermined trigger condition, an error notification is output, and a robot (11) is brought to a safe state. When the weight tolerance is within a predetermined trigger condition, a weight compensation information is sent to correctly compensate the weight held by the robot (11).

## Description

### Field of the Invention

The present invention relates to a robot, and more particularly to a robot safety weight compensation system and method capable of safely compensating the weight (relating to one workpiece) of the robot when the weight of the end of the robot changes.

### Background of the Invention

With the vigorous development of robot technology, factories use robots to assist operators in rapid processing, assembly, and manufacturing operations to improve factory production efficiency. Whether the robots can operate normally seriously affects the safety of the operators. Therefore, countries have set strict safely standards and regulations to maintain the operational safety of robots.

To ensure the safety of robots and operators working at the same time, the collision force must be limited. Therefore, collision force detection is the main collaboration function possessed by most collaborative robots. In the detection of collision force in the prior art, a current sensor is usually installed in a robot joint to estimate the joint torque or a torque sensor is installed in the robot joint to obtain the joint torque directly, or force and torque sensors are installed at the end of the robot to detect collision force and torque, or the robot detects the position information of the joint and uses a dynamic calculation to obtain the end force and torque to detect the collision force.

The prior art detects the joint torque, and the end force and torque during the collision, and performs weight compensation according to the influence of the posture, speed, and acceleration of the robot on the weight of each limb of the robot, or the influence of automatic changing tools, such as picking up a tool, dropping a tool, and replacing tools of different weights, at the end of the robot upon the weight of the robot. Due to automation requirements, the prior art designs workpiece and tool weight compensation parameters, or workpiece and tool code parameters in the robot programming system, allowing the user to write parameters or conditions into the program for compensating the changed weight when changing the weights of the workpiece and tool. With weight compensation, the user can obtain the correctly detected collision force, allowing the user to set a safe shutdown setting in response to the collision force to ensure the safety of the collaborative robot.

However, for the prior art robot programming system, a non-professional user may make programming mistakes. Even if no mistake is made, it still needs to be compiled into executable commands, which leads to potential errors in the programming system and the compilation system. In addition, when the robot's control system makes an error, it may perform weight compensation at an incorrect time. These errors will directly cause the robot' s force and torque shutdown safety function to lose its effect. For example, the robot holds a heavy workpiece, but the compensation obtained by the safety module indicates light and insufficient. When the robot moves in the direction of gravity, though the collision force on the user exceeds the shutdown condition set by the user, the robot's control system cannot stop the robot. Since the safety functions are not enabled, the safety of the collaborative robot is not ensured, which seriously affects the safety of the collaborative workers. Therefore, there are still problems that need to be solved in the robot system and method for weight compensation.

### Summary of the Invention

The present disclosure aims at providing a robot safety weight compensation system and method. This is achieved by the robot safety weight compensation system according to claim 1 and the robot safety weight compensation method according to claim 7. The dependent claims pertain to corresponding further developments and improvements.

A dynamic calculation of a robot is performed to calculate an estimated torque of a joint. A detected torque of the joint is obtained by detection. The difference between the estimated torque and the detected torque is calculated as a weight tolerance. If the weight tolerance is within the predetermined trigger condition, send the weight compensation information. If the weight tolerance exceeds the predetermined trigger condition, take the robot to a safe state to ensure correctly weight compensation.

When performing weight compensation, the difference between an estimated torque of a joint and a detected torque of the joint is calculated as an additional torque of the joint. If the additional torque of the joint exceeds the predetermined stop condition, stop weight compensation and bring a robot to a safe state. If the additional torque of the joint is within the predetermined stop condition, perform normal weight compensation to ensure the safety of collaboration.

The robot safety weight compensation system uses a controller to receive detection signals of the current sensor and position sensor of the actuator in each joint of the robot and controls the robot. The controller is equipped with a control unit that receives the weight compensation settings of the robot and then sends the weight compensation information to a safety module coupled to the control unit through an electrical or communication interface. The safety module is coupled to a safe state unit which controls the robot to enter a safe state. A check weight compensation module set in the safety module uses the position sensor to obtain the position information of the joint, receives the weight compensation information of the safety module, uses a dynamic calculation to calculate an estimated torque of the robot, and detects a detected torque of the robot. A collision sensing module in the safety module receives weight compensation information from the check weight compensation module to detect a collision force of the robot. The weight compensation setting is transmitted to the control unit according to the present invention. The safety module receives the weight compensation information from the control unit. The check weight compensation module calculates the difference between the estimated torque and the detected torque to form a weight tolerance. If the weight tolerance exceeds the predetermined trigger condition, an error notification is output, the weight compensation information is not sent to the collision sensing module, and the safety module controls the safe state unit to bring the robot to a safe state. If the weight tolerance is within the predetermined trigger condition, the weight compensation information is sent to the collision sensing module.

In the robot safety weight compensation method, a weight compensation operation is started when the weight is changed, a dynamic calculation is performed to calculate an estimated torque, a detected torque is detected, and a difference between the estimated torque and the detected torque is calculated to generate a weight tolerance. If the weight tolerance exceeds a predetermined trigger condition, determine that the weight compensation information are false, report a mistake while not sending weight compensation information, and take a robot to a safe state. If the weight tolerance is within the predetermined trigger condition, determine that the weight compensation information are correct, send the weight compensation information, and perform the weight compensation operation for the robot. When performing the weight compensation operation, use a dynamic calculation to calculate an estimated torque, detect a detected torque, and calculate a difference between the estimated torque and the detected torque as the additional torque. If the additional torque exceeds a predetermined stop condition, take the robot to the safe state. If the additional torque is within the predetermined stop condition, perform the weight compensation operation for the robot.

### Brief Description of the Drawings

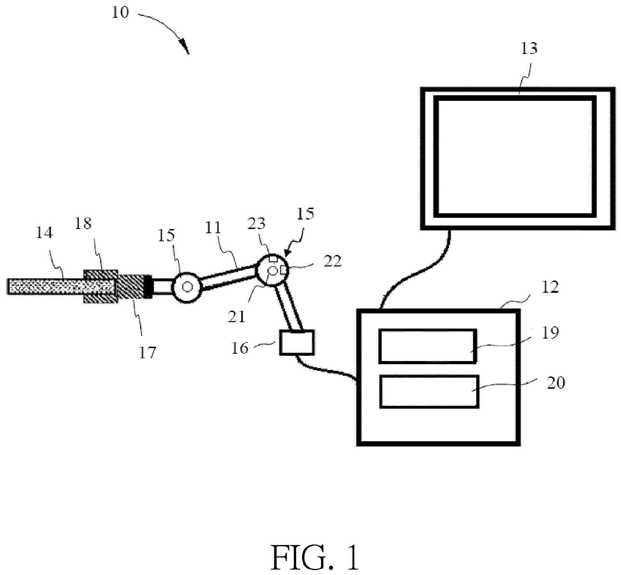

In the following, the invention is further illustrated by way of example, taking reference to the accompanying drawings. Thereof FIG. 1 is a schematic diagram of a robot safety weight compensation system of the present invention;
FIG. 2 is a functional block diagram of the robot safety weight compensation system in FIG. 1;
FIG. 3 is a flowchart of a robot safety weight compensation method of the present invention; and
FIG. 4 is a flowchart of another robot safety weight compensation method of the present invention.

### Detailed Description

In order to achieve the above-mentioned objects, the technical means and effects adopted by the present invention are described below with embodiments and drawings.

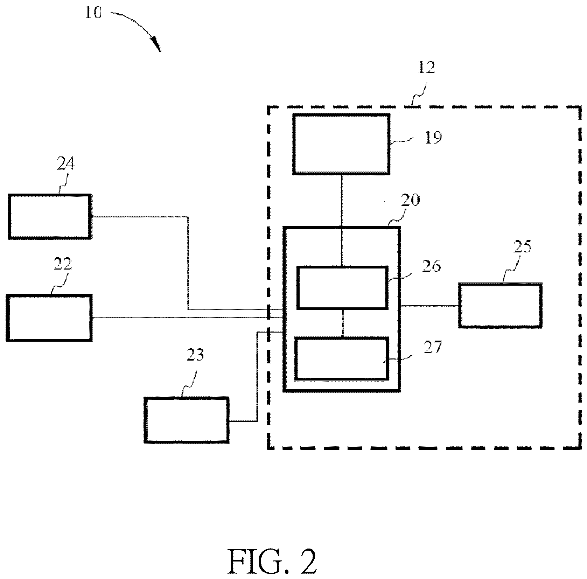

Please refer to FIGs. 1 to 2 at the same time. FIG. 1 is a schematic diagram of a robot safety weight compensation system 10 of the present invention. FIG. 2 is a functional block diagram of the robot safety weight compensation system 10 in FIG. 1. In FIG. 1, the robot safety compensation weight system 10 comprises a robot 11, a controller 12, a human-machine interface 13, a workpiece 14, etc. The robot 11 comprises a plurality of joints 15, a base 16 at one end, and a moveable end 17 at the other end. The moveable end 17 is connected to a tool 18 such as a gripper. The robot 11 is coupled to the controller 12. The controller 12 comprises a control unit 19 and a safety module 20. Through the control unit 19, the controller 12 uses a current sensor 22 and a position sensor 23 of an actuator 21 in each joint 15 to detect signals, controls the moveable end 17 of the robot 11 to drive the tool 18 to pick and place the workpiece 14. The controller 12 is also coupled to the human-machine interface 13 for editing programs of the robot 11 or operating and controlling the robot 11.

In FIG. 2, the current sensor 22, the position sensor 23, and a torque sensor 24 in the robot safety compensation weight system 10 are coupled to the controller 12 through an electrical or communication interface to transmit detection signals to the controller 12. The control unit 19 of the controller 12 uses the received detection signal to control the operation regardless of safe functions including function setting, motion control, and program control of the robot 11. The human-machine interface 13 electrically, communicatively, wired-connection, or wirelessly coupled to the controller 12 can program the weight compensation settings of the robot 11, use electrical signal, or input communication commands such as sensing vision, force, or human body motion for setting the weight compensation settings into the control unit 19. The controller 12 further comprises a safety module 20. The safety module 20 communicates with the control unit 19 through an electrical or communication interface. The safety module 20 can receive the weight compensation information from the control unit 19. The weight compensation information can be used to compensate the center of mass or the moment of inertia of a load.

The safety module 20 is connected to the safe state unit 25. The safe state unit 25 can control the robot 11 to enter the three types of safe state. The zeroth type of safe state is the power-off shutdown function: when the safetymodule 20 determines that the robot 11 should enter a safe state, it directly turns off the power of the actuator 21. The first type of safe state is the advanced power-off shutdown function: when the safety module 20 determines that the robot 11 should enter the safe state, a deceleration command is issued to the controller 12, after a fixed period of time or after the robot 11 is decelerated, the power of the actuator 21 is turned off. The second type of safe state is the non-power-off shutdown function: when the safety module 20 determines that the robot 11 should enter the safe state, a deceleration command is issued to the controller 12, after a fixed period of time or after the robot 11 is decelerated, a standstill monitoring function is turned on to continuously monitor the position sensor 23 when the robot 11 makes a move, turn off the power of the actuator 21. The robot 11 can enter a safe state with either one of the above types or can trigger any of the above types by different conditions.

The safety module 20 includes a check weight compensation module 26 and a collision sensing module 27. The check weight compensation module 26 has a kinematics model which uses the position sensor 23 installed on the joint 15 to learn the position information of the joint 15 of the robot 11, including speed information and acceleration information. The check weight compensation module 26 obtains the weight compensation information of the robot 11 from the control unit 19 and uses a dynamic calculation of the robot 11 to obtain the estimated torque of the joint 15. The check weight compensation module 26 further uses the current sensor 22 of the actuator 21 of the joint 15 of the robot 11 to measure the current of the actuator 21 to calculate the detected torque of the joint 15. Using the aforementioned kinematics model established by the robot 11 to obtain the estimated torque of the joint 15 and calculating the detected torque of the joint 15 from the current of the actuator 21 are of the prior art and can be referenced to Chinese patent number CN105643639A.

Next, the difference between the estimated torque of the joint 15 and the detected torque of the joint 15 can be calculated and recorded as the weight tolerance. If the weight tolerance exceeds the predetermined trigger condition, the weight compensation information are obviously erred, an error notification is issued, the check weight compensation module 26 would determine that the weight compensation information are incorrect and not send the weight compensation information to the collision sensing module 27, and the safety module 20 would control the safe state unit 25 to take the robot 11 to a safe state. If the weight tolerance is within the predetermined trigger condition, the check weight compensation module 26 would determine that the weight compensation information are correct and send the weight compensation information to the collision sensing module 27.

The collision sensing module 27 in the safety module 20 has the kinematics model of the robot 11, uses the position sensor 23 installed on the joint 15 to learn the position information of the joint 15 of the robot 11, including speed information and acceleration information, obtains the weight compensation information of the robot 11 from the check weight compensation module 26, and uses the dynamic calculation to obtain the estimated torque of the joint 15. The collision sensing module 27 further uses the current sensor 22 of the actuator 21 of the joint 15 of the robot 11 to sense the current of the actuator 21 to calculate the detected torque of the joint 15 and calculates the difference between the estimated torque of the joint 15 and the detected torque of the joint 15, which is recorded as the additional torque of the joint 15. If the additional torque of the joint 15 exceeds the predetermined stop condition, the safety module 20 controls the safe state unit 25 to bring the robot 11 to a safe state. If the additional torque of the joint 15 is within the predetermined stop condition, the normal operation of the robot 11 is maintained.

The aforementioned predetermined trigger condition for the weight tolerance and the predetermined stop condition for the additional torque can be built-in values for the robot 11, set by the user via the human-machine interface 13, or set through electrical signals, analog input communication commands, and various sensors. In addition, although the detected torque of the joint 15 in this embodiment is calculated by detecting the current of the actuator 21, a torque sensor 24 can be installed on the joint 15 to directly sense the detected torque of the joint 15. In addition, although this embodiment uses joint torque as an example, the present invention includes but is not limited to this embodiment. The present invention can calculate the end torque from each joint torque. Further, the present invention can use a dynamics model to convert the end space and estimate torque generated by the load at the end 17. The torque sensor 24 can be disposed to the end 17 of the robot 11 to obtain the detected torque of the end 17. The difference between the estimated torque of the end 17 and the detected torque of the end 17 can be used to check if the weight compensation settings of the end 17 are correct, or can be used to infer load information, etc.

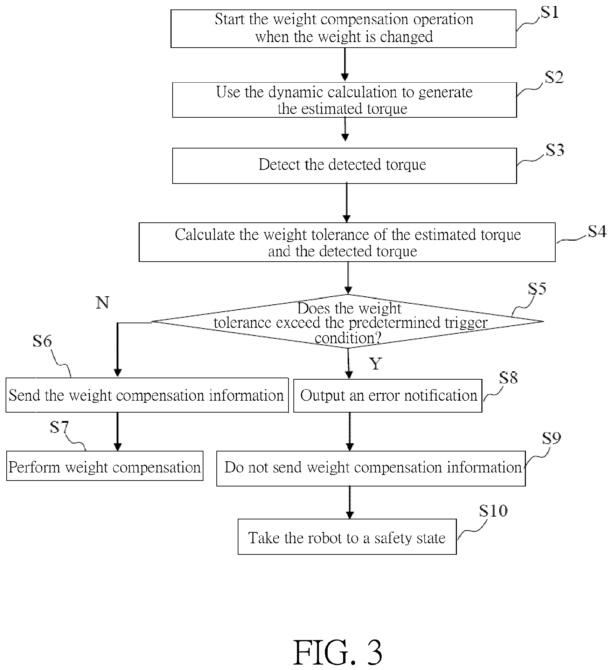

FIG. 3 is a flowchart of a robot safety weight compensation method according to an embodiment of the present invention. The detailed steps of the robot safety weight compensation method of the present invention are described as follows: Step S1, start the weight compensation operation when the weight is changed by, for example, one workpiece held by the robot 11; Step S2, use the dynamic calculation to generate the estimated torque; Step S3, detect the detected torque; Step S4, calculate the weight tolerance by calculating the difference between the estimated torque and the detected torque; Step S5, check if the weight tolerance exceeds the predetermined trigger condition? If the weight tolerance is within the predetermined trigger condition, go to step S6 to determine that the weight compensation information is correct, send the weight compensation information (relating to the workpiece held by the robot 11), and then go to step S7 to perform the weight compensation for the robot 11. In step S5, if the weight tolerance exceeds the predetermined trigger condition, go to step S8 to determine that the weight compensation information is false, and output an error notification, go to step S9 so as not to send the weight compensation information and go to step S10 to take the robot 11 to a safe state.

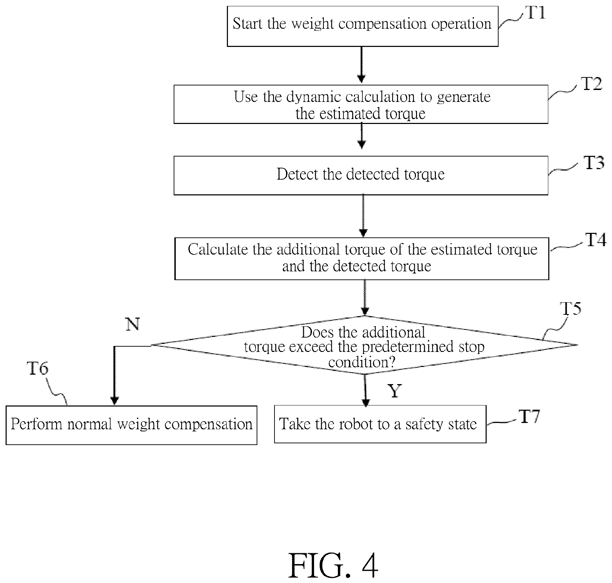

FIG. 4 is a flowchart of a robot safety weight compensation method according to another embodiment of the present invention. The robot safety weight compensation method in this embodiment is to continue step S7 of the previous embodiment and continue to perform the weight compensation operation on the robot 11. The detailed steps of the robot safety weight compensation method in this embodiment are described as follows: Step T1, start the weight compensation operation; Step T2, use the dynamic calculation to generate the estimated torque; Step T3, detect the detected torque; Step T4, calculate the difference between the estimated torque and the detected torque as the additional torque; Step T5, check if the additional torque exceeds the predetermined stop condition? If the additional torque is within the predetermined stop condition, go to step T6 to allow the robot 11 to perform the weight compensation normally. If the additional torque exceeds the predetermined stop condition, go to step T7 to take the robot 11 to a safe state.

In summary, the robot safety weight compensation system and method of the present invention can calculate the difference between the estimated torque obtained by the dynamic calculation of the robot and the detected torque obtained by the detection as the weight tolerance. If the weight tolerance is within the predetermined trigger condition, the weight compensation information is sent to perform the weight compensation. If the weight tolerance exceeds the predetermined trigger condition, an error notification is output and the robot is brought to a safe state. The invention calculates the difference between the estimated torque and the detected torque as the additional torque when performing the weight compensation. If the additional torque exceeds the predetermined stop condition, stop the weight compensation and bring the robot to a safe state. If the additional torque is within the predetermined stop condition, the normal weight compensation operation is performed to ensure correct the weight compensation and safe collaboration.

## Claims

1. A robot safety weight compensation system (10) **characterised by** comprising:
a controller (12) configured to receive detection signals of a current sensor (22) and a position sensor (23) of an actuator (21) in each joint (15) of a robot (11) to control a movement of the robot (11);
a control unit (19) set in the controller (12) and configured to receive weight compensation settings of the robot (11);
a safety module (20) coupled with the control unit (19) through an electrical or communication interface to receive weight compensation information from the control unit (19);
a safe state unit (25) coupled to the safety module (20) and configured to control the robot (11) to enter a safe state;
a check weight compensation module (26) set in the safety module (20) and configured to obtain position information of the joint (15) via the position sensor (23), receive the weight compensation information of the safety module (20), use dynamics to calculate an estimated torque of the robot (11), and detect a detected torque of the robot (11); and
a collision sensing module (27) set in the safety module (20) and configured to receive a weight compensation information from the check weight compensation module (26) to detect a collision force of the robot (11);
wherein the control unit (19) receives the weight compensation settings of the robot (11), the safety module (20) receives the weight compensation information from the control unit (19), the check weight compensation module (26) calculates a difference between the estimated torque and the detected torque to form a weight tolerance, if the weight tolerance exceeds a predetermined trigger condition, output an error notification, does not send the weight compensation information to the collision sensing module (27), and the safety module (20) controls the safe state unit (25) to take the robot (11) to the safe state.

2. The robot safety weight compensation system (10) of claim 1 **characterised in that** if the weight tolerance is within the predetermined trigger condition, send the weight compensation information to the collision sensing module (27).

3. The robot safety weight compensation system (10) of claim 1 **characterised in that** the control unit (19) is electrically or communicatively coupled to a human-machine interface (13) or via electrical signals or analog input commands for setting the weight compensation settings of the robot (11).

4. The robot safety weight compensation system (10) of claim 1 **characterised in that** the safety module (20) comprises at least one of the following types of safe state:
a zeroth type of safe state is a power-off shutdown function: when entering the zeroth type of safe state, a power of the actuator (21) is turned off;
a first type of safe state is an advanced power-off shutdown function: when entering the first type of safe state, a deceleration command is issued to the controller (12), after the robot (11) is decelerated, the power of the actuator (21) is turned off; and
a second type of safe state is a non-power-off shutdown function: when entering the second type of safe state, the deceleration command is issued to the controller (12), after the robot (11) is decelerated a standstill monitoring function is turned on to continuously monitor the position sensor (23), when the robot (11) makes a move turning off the power of the actuator (21) .

5. The robot safety weight compensation system (10) of claim 1 **characterised in that** the check weight compensation module (26) uses the current sensor (22) of the actuator (21) to sense a current of the actuator (21) to calculate the detected torque of the robot (11) .

6. The robot safety weight compensation system (10) of claim 1 **characterised in that** the estimated torque and the detected torque obtained by the check weight compensation module (26) are of a torque of the joint (15) of the robot (11).

7. A robot safety weight compensation method **characterised by** comprising:
starting a weight compensation operation when a weight is changed;
performing a dynamic calculation to calculate an estimated torque;
detecting a detected torque;
generating a weight tolerance by calculating a difference between the estimated torque and the detected torque;
if the weight tolerance exceeds a predetermined trigger condition, determining that weight compensation information is false, reporting a mistake while not sending weight compensation information, and taking a robot (11) to a safe state.

8. The robot safety weight compensation method of claim 7 **characterised by** further comprising if the weight tolerance is within the predetermined trigger condition, determining that the weight compensation information is correct, sending the weight compensation information, and performing the weight compensation operation for the robot (11).

9. The robot safety weight compensation method of claim 8 **characterised in that** performing the weight compensation operation for the robot (11) comprises:
using a dynamic calculation to calculate an estimated torque;
detecting a detected torque;
calculating a difference between the estimated torque and the detected torque as an additional torque; and
if the additional torque exceeds a predetermined stop condition, taking the robot (11) to the safe state.

10. The robot safety weight compensation method of claim 9 **characterised by** further comprising:
if the additional torque is within the predetermined stop condition, performing the weight compensation operation for the robot (11).

11. The robot safety weight compensation method of claim 10 **characterised in that** the estimated torque and the detected torque are of a torque of a joint (15) of the robot (11).
